# EUROPEAN PATENT SPECIFICATION

(11) **EP 3 182 427 B1**
(45) Date of publication and mention of the grant of the patent: **20.05.2020**
(21) Application number: 15201252.2
(22) Date of filing: 18.12.2015
(51) Int. Cl.: H01F 38/30, H01F 27/04, H02B 13/00

(54) **CURRENT TRANSFORMER FOR HIGH VOLTAGE GAS INSULATED SWITCHGEAR SUBSTATION**
STROMWANDLER FÜR HOCHSPANNUNGSGASISOLIERTE SCHALTANLAGENUNTERSTATION
TRANSFORMATEUR DE COURANT POUR SOUS-STATION DE COMMUTATION HAUTE TENSION À ISOLATION GAZEUSE

(43) Date of publication of application: 21.06.2017
(73) Proprietor: ABB Schweiz AG, 5400 Baden (CH)
(72) Inventor: Odehnal, Martin, 64400 Brno (CZ); Belehrad, Lukas, 625 00 Brno (CZ); Michlicek, Petr, 741 01 Novy Jicin (CZ); Liu, Andy-Hai, 361004 Xiamen, Fujian (CN); Braun, Thomas, 60437 Frankfurt (DE); Holaus, Walter, 8192 Glattfelden (CH)
(74) Representative: Maiwald Patent- und Rechtsanwaltsgesellschaft mbH

(56) References cited:
- EP-A1- 1 894 689
- EP-A1- 2 800 112
- WO-A1-2006/077181
- DE-A1- 4 318 367
- FR-A- 779 834
- FR-A1- 2 769 123
- GB-A- 1 255 661

## Description

The invention relates to a method for producing a current transformer for high voltage gas insulated switchgear substation according to independent claim 1.

Current transformers for high voltage application located outside of SF6 insulation with pressed aluminum flanges connection are used in high voltage gas insulated switchgear substation.

Furthermore, standard current transformer for high voltage application consists of two flanges connected by screws, insulation parts and other component. The standard connection is high risky for good quality, mechanical stability and sealing protection for SF6.

EP 2 800 112 A1 discloses a current transformer, with the features of the preamble of claim 1. Furthermore, flanges are used, which are peglike.

EP 1 894 689 A1 discloses an applicator for glue on different possible surfaces.

So it is an object of the invention to enhance the connection of the aforesaid two flanges, in order to result in high level mechanical stability and sealing.

The Invention is, that the aforesaid flanges are fixed to the insulating tubelike housing by glueing in that way, that both flanges are provided with a peg-like portion, whose external diameter corresponds with the inner diameter of the insulating tubelike housing, in such, that the peg-like portion is pushed tightly into the insulating housing, and that the intersurface between both corresponding surfaces is provided with a glue, and
that the outer surface of the the peg-like portions are provided with a rough or micro structured surface, by sandblasting or knurling, in order to result in a higher grip for the glue.

By that is given a better mechanical connection, as well as additionally a perfect tightness.

The invention relates to a method for producing a current transformer for high voltage gas insulated switchgear substation according to claim 1.

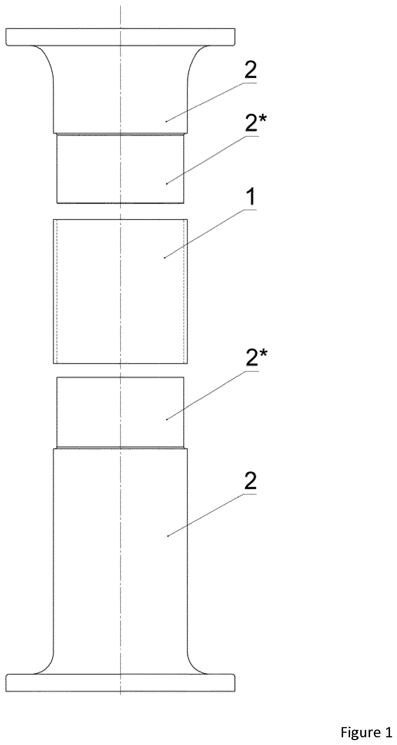

An embodiment of the invention is shown in Figure 1.

The two aluminum flanges 2 of the resulting current transformer housing is made by casting, or forging or machining, and are connected together via an insulation tube 1. The flanges, which are preferably made of aluminum, have special surface preparation, by sandblasting, or knurling, or etching, in order to result a higher mechanical joint strength and special groves area 2* for insulation purpose additionally. This surface is covered by glue, specially chosen to be suitable for using in SF6 environment, for additional sealing. The insulation tube is especially adapted for application in SF6 environment and based on the mechanical strength requirements. Aluminum flanges are finally pressed with their peg-like portions into the insulation tube, to make a final compact design.

For this operation, a special adapted electrical press machine is used. To keep GIS functionality, it is necessary, to achieve high toleration of total length of current transformer and precise thread holes position of both flanges for final GIS assembly.

## Claims

1. Method for producing a current transformer for high voltage gas insulated switchgear substation, wherein the current transformer is arranged in a tubelike insulating housing (1), which is connected with a respective fastening flange at both ends of the tubelike insulating housing, wherein the fastening flanges (2) are provided with a peg-like portion (2*), whose measure of the external diameter corresponds with the measure of the inner diameter of the tubelike insulating housing, **characterized in that** the peg-like portion is pushed tightly into the tubelike insulating housing, and that an intersurface between both corresponding surfaces is provided before pushing into the tubelike insulating housing with a glue, and wherein before deposition of the glue, at least an outer surface of the peg-like portions are pretreated by sandblasting, knurling or etching, in order to enlarge the microstrutured surface for resulting in more grip, for the deposited glue.

2. Current transformer for high voltage gas insulated switchgear substation, wherein the current transformer is arranged in a tubelike insulating housing, which is connected with a fastening flange at both ends of the tubelike insulating housing, manufactured by the method according to claim 1.

## Patentansprüche

1. Verfahren zur Herstellung eines Stromtransformators für ein Umspannwerk mit einer gasisolierten Hochspannungsschaltanlage, wobei der Stromtransformator in einem rohrähnlichen isolierenden Gehäuse (1) angeordnet ist, das an beiden Enden des rohrähnlichen isolierenden Gehäuses mit jeweils einem Befestigungsflansch verbunden ist, wobei die Befestigungsflansche (2) mit einem Klemmanteil (2*) versehen sind, deren Außendurchmessermaß dem Innendurchmessermaß des rohrähnlichen isolierenden Gehäuses entspricht,
**dadurch gekennzeichnet, dass** der Klemmanteil stramm in das rohrähnliche isolierende Gehäuse geschoben wird und dass eine Grenzfläche zwischen beiden entsprechenden Oberflächen vor dem Einschieben in das rohrähnliche isolierende Gehäuse mit einem Kleber versehen wird, und wobei zumindest eine Außenoberfläche der Klemmanteile vor Aufbringen des Klebers durch Sandstrahlen, Rändeln oder Ätzen vorbehandelt wird, um die mikrostrukturierte Oberfläche zu vergrößern, damit sich eine bessere Haftung für den aufgebrachten Kleber ergibt.

2. Stromtransformator für ein Umspannwerk mit einer gasisolierten Hochspannungsschaltanlage, wobei der Stromtransformator in einem rohrähnlichen isolierenden Gehäuse angeordnet ist, das an beiden Enden des rohrähnlichen isolierenden Gehäuses mit einem Befestigungsflansch verbunden ist, hergestellt mittels des Verfahrens nach Anspruch 1.

## Revendications

1. Procédé de fabrication d'un transformateur de courant pour une sous-station de commutation haute tension à isolation gazeuse, le transformateur de courant étant disposé dans un boîtier isolant tubulaire (1) qui est raccordé à une bride de fixation respective aux deux extrémités du boîtier isolant tubulaire, les brides de fixation (2) étant pourvues d'une portion de type tenon (2*) dont la mesure du diamètre extérieur correspond à la mesure du diamètre intérieur du boîtier isolant tubulaire, **caractérisé en ce que** la portion de type tenon est poussée fermement dans le boîtier isolant tubulaire et **en ce qu'**une surface intermédiaire entre les deux surfaces correspondantes est pourvue de colle avant l'enfoncement dans le boîtier isolant tubulaire et avant le dépôt de la colle, au moins une surface extérieure des portions de type tenon étant prétraitée par sablage, moletage ou gravage afin d'agrandir la surface microstructurée pour donner une meilleure tenue pour la colle déposée.

2. Transformateur de courant pour une sous-station de commutation haute tension à isolation gazeuse, le transformateur de courant étant disposé dans un boîtier isolant tubulaire qui est raccordé à une bride de fixation aux deux extrémités du boîtier isolant tubulaire, fabriqué par le procédé selon la revendication 1.
